# EUROPEAN PATENT SPECIFICATION

(11) **EP 2 899 529 B1**
(45) Date of publication and mention of the grant of the patent: **12.10.2016**
(21) Application number: 14152564.2
(22) Date of filing: 24.01.2014
(51) Int. Cl.: G01N 13/02

(54) **Contact angle measurement apparatus**
Kontaktwinkelmessvorrichtung
Appareil de mesure d'angle de contact

(43) Date of publication of application: 29.07.2015
(73) Proprietor: Krüss GmbH, 22453 Hamburg (DE)
(72) Inventor: Friedrich, Bernd, 25474 Hasloh (DE); Bergmann, Tom, 22453 Hamburg (DE); Weser, Florian, 22453 Hamburg (DE); Scheithauer, Carsten, 22393 Hamburg (DE)
(74) Representative: Hauck Patentanwaltspartnerschaft mbB

(56) References cited:
- EP-A1- 0 919 801
- DE-U1-202004 013 564
- JP-A- 2011 179 974
- US-A1- 2009 180 106

## Description

The present application relates to a contact angle measurement apparatus for measuring a contact angle between a surface of a sample body and at least one drop of sample liquid disposed on the surface, the apparatus comprising at least one drop dosing device adapted and arranged for applying a drop of a liquid onto a surface of a sample body, an illuminating device adapted and arranged for illuminating each drop applied by the at least one drop dosing device and disposed on the surface from a first side of the at least one drop, and an image recording device adapted and arranged for recording an image of at least a transition region between the surface and each drop applied by the at least one drop dosing device and disposed on the surface in side view from a second side of the drop opposite the first side, wherein the illuminating device comprises a light-emitting arrangement which, when viewed by the image recording device, provides a two-dimensional light field.

The wettability of liquids on surfaces of solids is of great importance in many fields of technology, such as in the field of industrial production. For example, processes such as coating, painting, cleaning, printing, hydrophobic or hydrophilic coating, bonding, dispersion, etc. are influenced in a decisive manner by the wettability.

For a particular pair of solid and liquid the wettability is determined by, amongst others, the surface free energy of the solid and the surface tension of the liquid. In view of the fact that, following application of the liquid onto a surface of the solid, these parameters also determine the angle between the surface of the liquid and the surface of the solid at the point at which the surface of the liquid meets the surface of the solid, a measurement of this so-called contact angle can be used as a measure of the wettability. On this basis methods are known for characterizing surfaces of solid bodies with respect to their wettability properties by applying one or more drops of liquids having known properties (in particular known surface tensions) and serving as "sensors" onto a surface of interest and measuring the corresponding contact angle or angles. When using two or more different liquids having a different degree of polarity, it is further possible to derive the surface free energy from the measured contact angles of drops of the different liquids.

DE 197 54 765 C1 discloses a contact angle measurement apparatus which is adapted for carrying out methods of these types. It includes a syringe type drop dosing device adapted for metering a drop of liquid onto a surface of a solid sample body, an illuminating device adapted and arranged for illuminating the drop from a first side and a camera for recording a shadow image of the drop from a second side opposite the first side. Further, an image processing device is provided which is adapted to carry out a recognition of the contour of the drop and of the surface of the solid in the image recorded by the camera and to subsequently determine the contact angle based on the recognized contour and surface.

Since the measurements effected by an apparatus of the type as disclosed in DE 197 54 765 C1 rely on a camera recording a "perfect" shadow image of a drop in a back-lit lighting arrangement, and because most liquids used as sensor liquids reflect considerable portions of light emitted by illuminating devices, without taking complex measures the precision of contact angle measurements can be affected by reflections occurring on the drop surfaces, which reflections disturb the per-fectness of the recorded shadow image.

From the document JP2011179974A a contact angle measurement apparatus with the features of the preamble of claim 1 has become known.

It is an object of the present invention to provide a contact angle measurement apparatus which is of a simple construction and easy to use and nevertheless guarantees high precision measurements, and which overcomes the above disadvantages.

This object is achieved by a contact angle measurement apparatus according to claim 1. Advantageous embodiments of the apparatus are the subject-matter of the respective dependent claims.

The contact angle measurement apparatus is adapted to measure a contact angle between a surface of a solid sample body and one or more drops of sample liquid disposed on the surface. In case of two or more drops, which may be drops disposed on the surface next to each other at the same time or drops disposed on the surface at different points in time, the contact angle is measured for each drop of interest.

The apparatus includes one, two or more drop dosing devices. Each of these drop dosing devices is adapted and arranged for applying a drop of a liquid onto a surface of a sample body. This process is carried out by metering the drop, which may advantageously be effected such that it has a defined drop volume. Each of the drop dosing devices may include an internal fluid storing volume which has to be filled manually or automatically with a suitable liquid prior to applying a drop of that liquid to the surface. For example, syringe type drop dosing devices may be used which are releasably coupled to the apparatus and can be selectively removed in order to fill the internal fluid storing volume in the usual manner.

Irrespective of the particular type of drop dosing device it may be advantageous if the apparatus also comprises a liquid reservoir arrangement for storing one, two or more liquids. Such a liquid reservoir arrangement can be provided instead of or in addition to an internal fluid storing volume as described above. The liquid reservoir arrangement has one, two or more liquid reservoirs, and each of the drop dosing devices is in fluid communication with the liquid reservoir arrangement, more particularly with at least one of the liquid reservoirs of the liquid reservoir arrangement. In case two or more liquids are to be used, the liquid reservoir arrangement preferably includes a corresponding number of separate liquid reservoirs, each adapted for storing a different one of the liquids. In operation, liquid or liquids to be used for forming drops on a surface of a sample body is or are stored in the liquid reservoir arrangement, more particularly in a liquid reservoir or liquid reservoirs of the liquid reservoir arrangement, and can be delivered manually or preferably automatically to the drop dosing devices. In case two or more drop dosing devices are provided, they may be coupled to the liquid reservoir arrangement such that they apply the same liquid to different locations on the surface, e.g. in order to determine variations of the surface properties. However, as will be explained in more detail further below, it is preferred for two or more drop dosing devices being coupled to different liquid reservoirs of the liquid reservoir arrangement storing different liquids.

Moreover, in any case the apparatus comprises an illuminating device and an image recording device. The illuminating device is adapted and arranged for illuminating any drop applied by the drop dosing device or drop dosing devices and disposed on the surface from a first side of the respective drop, and the image recording device is adapted and arranged for recording an image of any such drop or of at least a transition region between the surface and any such drop in side view from a second side of the drop opposite the first side. Thus, the relative arrangement of the illuminating device and the image recording device is such that images of drops can be recorded in a back-lit lighting arrangement to obtain shadow images of the drops. It is to be noted that a separate image may be recorded for each of the above drops, or a single image may be recorded for a plurality of the above drops or all of the above drops.

The illuminating device comprises a light-emitting arrangement which, when viewed by the image recording device, i.e. in images recorded by the image recording device, provides a two-dimensional light field. In other words, the light-emitting arrangement creates the two-dimensional light field behind the drops in images recorded by the image recording device. The contact angle measurement apparatus further comprises a controller connected to the illuminating device. The controller and the light-emitting arrangement are adapted such that one or two dimensions of the light field are selectively adjustable by the controller. Advantageously, the controller may be an electronic component which may be integrated into a common housing with some or all of the remaining components of the apparatus. However, it is, e.g., also possible to provide the controller as a separate computing device, such as a suitably programmed computer or PC, connected to the remainder of the apparatus and not integrated into a common housing with other components of the apparatus.

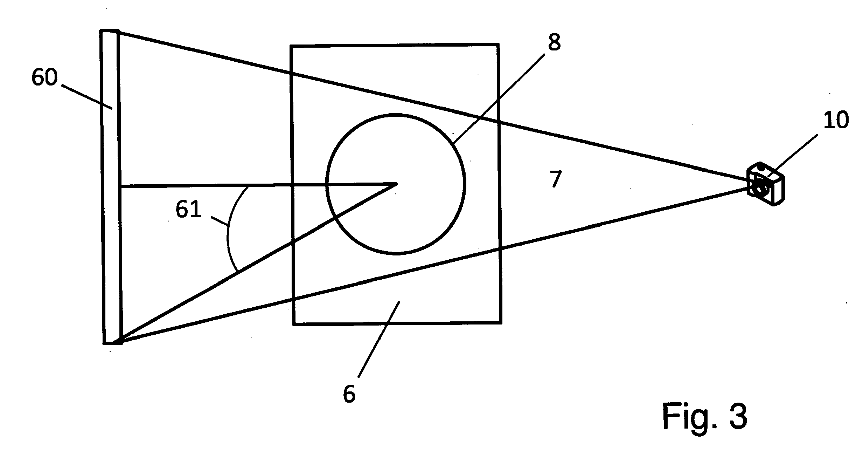

As will be explained below with reference to Figures 3 to 5, it has been found that measurement errors caused by reflections can be minimized by adapting the dimensions and, preferably, at least the width of the light field to the dimensions of the drop or drops illuminated by the illuminating device. More specifically, the dimensions of the light field should be chosen smaller with decreasing drop size. The above configuration of the controller and the illuminating device provide the advantage that such adaptation is easily and flexibly possible and may be subject to automatic control. In the case of two or more drops it is advantageous to provide for the possibility to illuminate each drop separately by choosing in each case the dimensions of the light field in such a manner that only the drop at issue is illuminated. In effect, the light field can then be divided into separate zones for the different drops, with the zones being switched on one at a time and the dimensions of each zone being adapted to the respective drop to minimize measurement errors as described above. Drops applied to the surface by the apparatus generally may have a diameter of, e.g., 4 mm or less and preferably 2 mm or less when applied to have a contact angle of 90°, and multiple drops may have a distance between the centers of the drops of, e.g., about 6 mm.

In an advantageous embodiment the entire apparatus may be constructed as a mobile apparatus. It is easily possible to select suitable components for the construction of the apparatus, which components are of sufficiently small dimensions. However, depending on the application at issue, the entire apparatus or at least parts of the apparatus may also be constructed to be stationary, i.e. non-mobile.

It is to be noted that the apparatus may be used both for planar and for curved surfaces, wherein the construction of the apparatus determines the allowable maximum curvature in that it must be possible to record shadow images of the drops in the manner described above. The apparatus may include a support structure by means of which it can be supported on the surface on which the measurement is to be carried out and/or by means of which it can be suspended above the surface. Of course, it is also possible that the apparatus is held in its measurement position above or on the surface by a suitable external holding means. Such support structure or holding means may be constructed to be adjustable in order to allow for adaptability to surfaces of different shapes. In addition or in the alternative, the illuminating device and/or the image recording device may be constructed to have adjustable positions in order to allow for such adaptability.

The light-emitting arrangement comprises a plurality of light-emitting elements arranged in an array for providing the two-dimensional light field. The controller is then adapted to adjust at least one dimension of the light field by selectively switching on and off the light-emitting elements. The array may be one- or two-dimensional. In the case of a one-dimensional array, the second dimension of the light field must be provided by a suitable size or extension of the light-emitting elements in the corresponding direction. Adjusting dimensions of the light field by switching on and off light-emitting elements is particularly simple to realize and can easily be effected by way of automatic control by the controller.

The light-emitting elements are preferably light-emitting diodes, which may be selected, e.g., from the group consisting of monochromatic light-emitting diodes and white light-emitting diodes. In particular, the light-emitting diodes may be anorganic light-emitting diodes or organic light-emitting diodes (OLEDs). Due to their small size, OLEDs may be advantageously in cases in which it is desired to create a light field having a "high resolution", so that the dimension or dimensions can be changed in very small steps.

The light-emitting arrangement may comprise a light diffuser, which is mounted with respect to the light-emitting elements in such a manner that the light emitted by the light-emitting elements passes through the light diffuser, so that the light field is generated by light emitted by the light-emitting elements and diffused by the light diffuser. The light diffuser is preferably provided as a plate or block of suitable translucent material completely covering the array of the light-emitting elements on a side to which the light-emitting elements emit light. The light field is then provided on a surface of the light diffuser opposite the light-emitting elements. The light diffuser is particularly advantageous in cases in which, due to constructive characteristics of the light-emitting elements, relatively large gaps have to be provided between adjacent light-emitting elements, and then serves to provide a light field with a homogeneous light distribution.

In the alternative, it may be advantageous if the light field is generated directly by the light-emitting elements, i.e. that no diffuser is provided. In order to ensure a homogeneous light distribution, this requires small gaps between adjacent light-emitting elements. This can be realized, for example, by OLEDs.

In a preferred embodiment the illuminating device includes an illuminating unit and a spring suspension arrangement carrying the illuminating unit, wherein the illuminating unit comprises the light-emitting arrangement and is arranged in such a manner that it can rest on the surface of the sample body while being pressed against the surface by a spring force applied by the spring suspension means. For example, the illuminating unit may be arranged such that it can project partly or completely out of a housing of the apparatus.

In a preferred embodiment the light-emitting arrangement comprises a diaphragm having an adjustable aperture. The controller is connected to the diaphragm and adapted to adjust at least one dimension of the light field by selectively adjusting the aperture of the diaphragm.

In embodiments in which only one dimension of the light field is adjustable by the controller, a diaphragm having an adjustable aperture may also be provided which is manually adjustable in order to allow for manual adjustment of a further dimension of the light field. For example, in the above-described embodiment having a one-dimensional array of light-emitting elements allowing for an adjustment of the width of the light field by selectively switching on and off the light-emitting elements, a manually adjustable diaphragm could be provided to enable manual adjustment of the height of the light field.

The light-emitting arrangement may comprise a lens and/or a light-deflecting element, such as, e.g., a deflecting mirror or prism. Such a configuration advantageously allows for flexibility in the positioning of the above-described light-emitting elements arranged in an array. However, it is preferred, in particular when providing an illuminating unit as described above, to position the above-described light-emitting elements arranged in an array, on a side of the drops opposite to the side from which the images are recorded.

In a preferred embodiment, the controller and the light-emitting arrangement are adapted such that at least the width of the light field, when viewed by the image recording device (i.e. the dimension parallel to the surface), is selectively adjustable by the controller. This dimension is particularly important for minimizing reflections and associated measurement errors. In this regard, it may be advantageous if the controller and the light-emitting arrangement are adapted such that both the width and the height of the light field, when viewed by the image recording device (i.e. also the dimension perpendicular to the surface), are selectively adjustable by the controller.

In a preferred embodiment, the contact angle measurement apparatus further comprises a processing device, which is connected to or forms part of the image recording device and which is adapted to receive an image from the image recording device representing a shadow image of a drop on the surface, to analyze the received image, and to cooperate with the controller to automatically effect adjustment of at least one dimension of the light field based on the result of the analysis in order to maximize the respective at least one dimension of the shadow image of the drop. By adjusting a dimension and in particular the width of the light field to maximize the respective dimension of the shadow image, reflections are minimized. The adjustment may involve adjusting the at least one dimension in several steps and recording a new image after each adjustment step. Automatic adjustment facilitates use of the apparatus and obtaining precise measurement results. The processing device and the controller may also be provided as a single device.

In a preferred embodiment, each of the drop dosing devices is arranged to apply drops of liquid in a field of view of the image recording device and/or in a region illuminated by the light field. Consequently, the image recording device, the sample body and/or the illuminating device do not have to be moved after application of a drop, thereby decreasing the time necessary for recording an image of the drop after its application.

In this embodiment, but also in general, it is preferred if the drop dosing device or drop dosing devices, the illuminating device and the image recording device are integrated into a movable measurement head. This provides for a particularly easy to use configuration.

The image recording device may be a camera or a device including a light-sensitive sensor, such as, e.g., a CCD image sensor or a CMOS image sensor. Thus, the image recording device may be, e.g., a CCD or CMOS camera.

In a preferred embodiment, the contact angle measurement apparatus further comprises a processing device, which is connected to or forms part of the image recording device and which is adapted for carrying out a contour recognition of any drops present in images recorded by the image recording device and determining for each of these drops a contact angle from the recognized contour. The contour recognition may be based, e.g., on a grey-scale analysis of the image and then fitting a geometrical model describing the drop shape to the image in order to determine the contour. If this embodiment is combined with an embodiment described above implementing an automatic adjustment of at least one dimension of the light field to maximize the respective dimension of the shadow image and to minimize reflections, a single processing devices is preferably used.

In a preferred embodiment, the contact angle measurement apparatus further comprises an actuation means, such as a button or switch, for actuation by an operator and connected to the controller. The controller is adapted to detect actuation of the actuation means and, upon detecting actuation, to automatically control the drop dosing device or drop dosing devices to apply a respective drop of liquid to the surface, the illuminating device to illuminate each such drop including adjusting at least one dimension of the light field, and the image recording device to record an image of each such drop illuminated by the illuminating device. In particular, the above-described automatic optimization of the light field dimension or dimensions is advantageous in this embodiment. Thus, a "one click solution" is provided which greatly simplifies use of the apparatus. In case the apparatus includes a processing device of the above configuration for carrying out contour recognition and contact angle determination, the one click solution advantageously also comprises automatically controlling the processing device by the controller to determine the contact angle for each of the drops. Consequently, it is only necessary for the operator to move the contact angle measurement apparatus into a suitable position above the surface and to actuate the actuation means, and subsequently the apparatus is operating autonomously until the desired measurement results are provided.

In the following an exemplary embodiment of the display device will be explained in more detail with reference to the drawings.
Figure 1 shows a schematic sectional side view of the contact angle measurement apparatus according to an embodiment of the present invention.
Figure 2 shows a schematic block diagram of two drop dosing devices used in the contact angle measurement apparatus of Figure 1.
Figure 3 shows a schematic top view of a part of the measuring arrangement of the apparatus of Figure 1 for measuring the contact angle of a single drop.
Figure 4 shows a schematic side view of the drop of Figure 3 as viewed by the camera of the apparatus of Figure 1 in a first adjustment state of the illuminating device.
Figure 5 shows a schematic side view of the drop of Figure 3 as viewed by the camera of the apparatus of Figure 1 in a second adjustment state of the illuminating device.
Figure 6 shows a schematic side view of a light source of the illuminating device.
Figure 7 shows a schematic side view of the drop of Figure 3 as viewed by the camera of the apparatus of Figure 1 when using the light source of Figure 6.

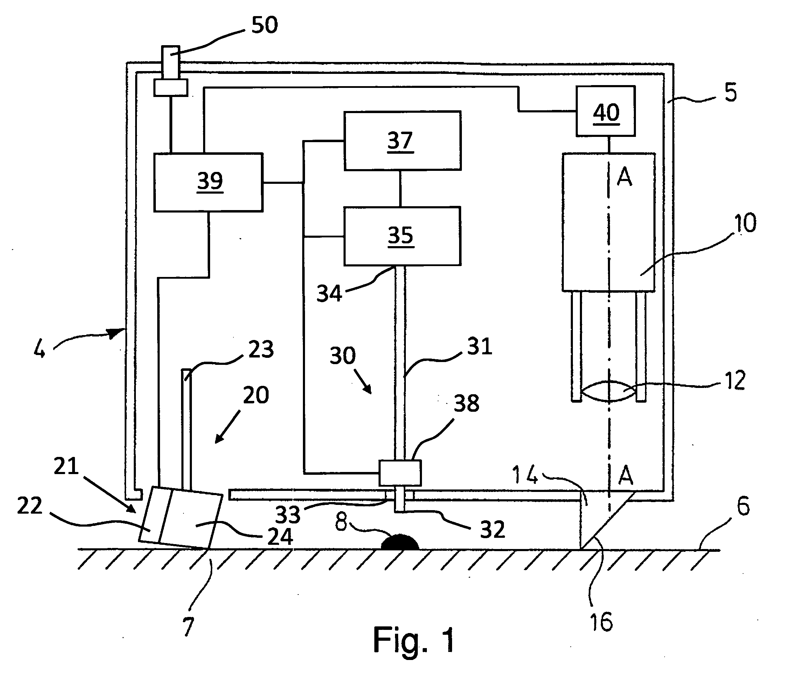

The contact angle measurement apparatus 4 shown in Figure 1 in a schematic sectional side view is illustrated in its measurement position closely above the surface 6 of a solid sample body 7, which surface 6 is preferably oriented horizontally. It can be seen that a drop 8 is disposed on the surface 6. The contact angle measurement apparatus 4 is operable to determine the angle between a tangent of the contour of the drop 8 and the surface 6 of the sample body 7 at a point where the contour and the surface 6 meet, i.e. which is common to the surface 6 and the contour. In the illustration of Figure 1 the tangent extends in the plane of the Figure. For a correct fitting of the tangent to the contour of the drop 8 it is necessary that the drop 8 or at least a transition region between the drop 8 and the surface 6 of the sample body 7 is imaged in side view, which in the case of Figure 1 is done by viewing the drop 8 from the right.

For this purpose, the apparatus 4 comprises inside a housing 5 a camera 10. The optical axis A-A of the camera 10 extends perpendicularly to the surface 6 of the sample body 7. However, when suitably adapting the imaging beam path, it is also possible to provide an angle between the optical axis A-A and the surface 6 different from 90°. The camera 10 includes a lens 12, which is preferably focusable automatically. Projecting from the bottom side of the housing 5 is a total-reflection prism 14 which serves as a deflection means for the imaging beam path of the camera 10. The prism 14 enables recording an image of the drop 8 by the camera 10 in side view parallel or essentially parallel to the surface 6. Total reflection is occurring at the side face 16 of the prism 14.

The apparatus 4 further comprises an illuminating device 20 which is disposed opposite the camera 10 on the other side of the drop 8. The illuminating device 20 includes an illuminating unit 21 and a spring suspension arrangement 23 mounted inside the housing 5 and carrying the illuminating unit 21 in such a manner that the illuminating unit 21 projects or may project from the bottom side of the housing 5 and - in operation, i.e. in the measurement position illustrated in Figure 1 - can be elastically pressed against the surface 6 while contacting the surface 6 with a defined portion, such as an edge of the illuminating unit 21. The spring suspension arrangement 23 may preferably comprise one or more leaf springs (not shown) which are arranged and constructed to allow for guided movement of the illuminating unit 21 in a direction parallel to the optical axis A-A. In other words, the leaf spring or leaf springs provide a substantially higher resistance against movement perpendicularly to the optical axis A-A than against movement parallel to this direction.

In the illustrated advantageous embodiment the illuminating unit 21 comprises a light source 22 and a light diffuser 24 arranged such that light emitted by the light source 22 passes through the light diffuser 24. The illuminating unit 21 is mounted and oriented in such a manner that - in the measurement position illustrated in Figure 1 - the light diffuser 24 is disposed between the prism 14 (and the drop 8) and the light source 22. Like the prism 14, in the measurement condition of the apparatus 4 the illuminating unit 21 is disposed close to the surface 6 of the sample body 7 and is operable to illuminate the drop 8 from a side along or essentially along the surface 6 with light emitted by the light source 22 and diffused by the diffuser 24 for homogenization purposes. In the schematic representation of Figure 1, the drop 8 is illuminated from the left side, so that a back-lit lighting arrangement is created for the camera 10 and a shadow image of the drop 8 can be recorded by the camera 10, allowing for determining the contour of the drop 8.

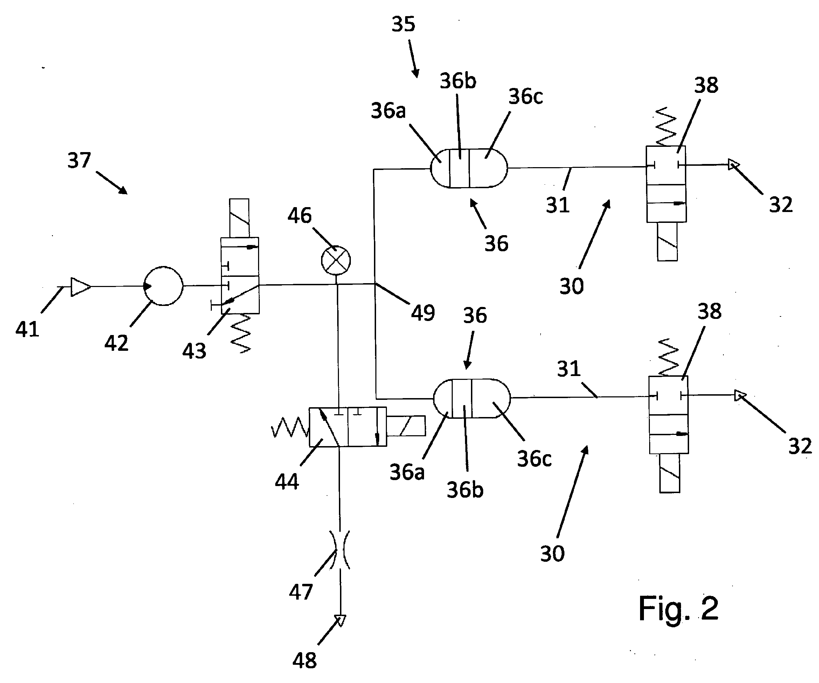

For applying drops 8 to the surface 6 of the sample body 7, the apparatus 4 further includes two drop dosing devices 30, only one of which is visible in Figure 1 (the other drop dosing device 30 is located behind the drop dosing device 30 visible in Figure 1, i.e. behind the plane of the drawing, and can be seen in Figure 2, and accordingly a drop 8 formed by the other drop dosing device 30 is positioned spaced from the drop 8 visible in Figure 1 behind the latter drop 8). Each of the drop dosing devices 30 comprises a tube, needle or cannula 31, a nozzle 32 which projects downwardly towards the surface 6 from an opening 33 provided in the bottom side of the housing 5, such that it is spaced from the surface 6, i.e. such that the nozzle 32 projects less from the bottom side of the housing 5 than both the prism 14 and the illuminating unit 21. The nozzle 32 provides an outlet from which liquid transported within the tube or needle 31 can exit to form the drop 8.

At the end 34 of the tube or needle 31 opposite the nozzle 32 the tube or needle 31 is connected to a liquid reservoir arrangement 35. The liquid reservoir arrangement 35 includes two liquid reservoirs 36 in which two different liquids of different polarity are stored, and each tube or needle 31 of the two drop dosing devices 30 is in fluid communication with a different one of the two liquid reservoirs 36, so that the drop dosing devices 30 form drops 8 of the different liquids.

Further, the apparatus 4 comprises within the housing 5 an air system 37 which is operable to provide pressurized air at a defined pressure to the liquid reservoir arrangement 35 and the drop dosing device 30 in order to pressurize the liquids stored in the liquid reservoirs 36 for forcing them under pressure through the tubes or needles 31 and out of the outlets at the nozzles 32 in liquid jets onto the surface 6 to form the drops 8.

The tube or needle 31 of each of the drop dosing devices 30 is normally blocked near the nozzle 32 by a valve 38, which is connected to a controller 39 adapted for controlling opening and closing of the valve 38. Thus, for applying a drop 8 to the surface 6 the controller 39 controls the valve 38 to open for a defined period of time, during which the liquid from the respective liquid reservoir 36 pressurized by the pressurized air is forced by the pressure out of the outlet of the respective nozzle 32, and to then close again, thereby allowing formation of a drop 8, which may advantageously have a defined volume. In an alternative embodiment the nozzle 32 and the valve 38 of each of the drop dosing devices 30 may be provided as a single component, i.e. as a nozzle having an integrated valve.

The controller 39 is also connected to each of the illuminating device 20, the liquid reservoir arrangement 35 and the air system 37 for controlling operation of these components, and to a processing device 40 operably connected to the camera 10. The processing device 40 in turn controls operation of the camera 10 and is adapted and operable to receive and analyze images recorded by the camera 10.

In the illustrated embodiment both the controller 39 and the processing device 40 are shown as being disposed inside the housing 5. For example, the controller 39 may be provided as a microcontroller. However, it is also possible that the controller 39 and/or the processing device 40 is provided as a separate device outside the housing 5, for example as a suitably programmed computer or PC.

The air system 37, the liquid reservoir arrangement 35 and the two drop dosing devices 30 are shown in more detail in the schematic block diagram of Figure 2.

As can be seen in Figure 2, the air system 37 comprises an air inlet 41, a pump 42 pressurizing air received through the air inlet 41, two valves 43 and 44, a pressure sensor 46 located and operable to sense the pressure of the pressurized air, a throttle valve 47, a pressure relief outlet 48, and an outlet 49 coupled in fluid communication to the liquid reservoir arrangement 35 for providing pressurized air to the liquid reservoirs 36. The controller 39 is adapted to function, amongst others, as a pressure regulator, which is operable to regulate the pressure of the pressurized air. Adjustment of the pressure of the pressurized air towards higher values can involve suitably adjusting operation of the pump 42, and adjustment of the pressure of the pressurized air towards lower values can be effected by suitably opening the valve 44 in order to relief pressure through the throttle valve 47 and the pressure relief outlet 48, wherein the throttle valve 47 limits maximum flow. For this purpose, the sensor 46, the valve 44, and the pump 42 (and possibly also the valve 43) are connected to the controller 39 such that the pressure regulator implemented by the controller 39 receives sensor signals from the sensor 46 and is able to control operation of the valve 44, and the pump 42 (and possibly also the valve 43) based on the sensed pressure in order to adjust the pressure at the outlet 49 to the defined pressure. The valve 43 is provided for avoiding an undesired pressure drop upon switching off the pump 42.

In Figure 2 it is further shown that the pressurized air is provided through the outlet 49 to an air reservoir portion 36a of each of the two liquid reservoirs 36, each of which air reservoir portion 36a is separated from a liquid reservoir portion 36c, in which the liquid is actually stored, by a gas-liquid separator 36b. In this manner, the liquids stored in the liquid reservoir portions 36c are pressurized by the pressurized air, thereby driving them out of the liquid reservoir portions 36c, through the tubes or needles 31 and out of the outlets at the nozzles 32 upon opening the valves 38.

For carrying out a contact angle and surface free energy measurement with two drops 8, an operator positions the apparatus 4 above the surface 6 of the sample body 7 in the position illustrated in Figure 1 and presses a button 50 mounted on the housing 5 and connected to the controller 39. The controller 39 is adapted to detect pressing of the button 50 and to then initiate an automatic control sequence, in which - possibly following control or adjustment of the pressure of the pressurized air by checking the pressure sensed by the pressure sensor 46 and operating the pressure regulator in the manner described above - the valves 38 are opened, e.g. simultaneously, for a defined period of time in order to apply the liquids in jets to the surface 6 to form two drops 8 next to each other, and to then close the valves 38 again. Then, the illuminating device 20 is controlled to illuminate the drops 8 from the left-hand side in Figure 1, and the camera 10 is operated - via the processing device 40 or alternatively via the controller 39 - to record a shadow image of both drops 8 viewing them from the right-hand side in Figure 1. The processing device 40 receives the image and carries out a contour analysis for both drops 8 and subsequently a determination of the contact angle for each drop 8. Further, the processing device 40 may be adapted to determine the surface free energy from the two contact angles. Thus, the measurement is carried out automatically in a very simple manner by simply pressing the button 50.

Preferably, the controller 39 is adapted to adjust the defined pressure of the pressurized air and/or the degree of opening of the valve 38 in such a manner that for each drop dosing device 30 the liquid is applied to the surface in the jet with a flow rate of 45 µl/s or less, preferably about 40 µl/s or less, more preferably about 35 µl/s or less, even more preferably about 30 µl/s or less, and most preferably 25 µl/s or about 25 µl/s.

Further, it is preferred if for each drop dosing device 30 the nozzle 32 is configured such that the ratio of the diameter of the jet of liquid exiting the outlet at the tip 32 and the diameter of a finished drop having a contact angle of 90° is 0.2 or less. In case different drop sizes shall be possible, the nozzles 32 may be configured such that, under control of the controller 39, they can be opened with variable flow cross-sections in order to change the jet diameter.

Instead of the air system, the apparatus 4 generally may also comprise a compressed gas system using a gas different than air, such as, e.g., CO₂. Such a compressed gas system is constructed and operating identically to the air system described above, with the only difference being that a gas other than air is used. Further, it is also possible to utilize a system directly pressurizing the liquids, e.g. by means of suitable pumps.

It should be noted that instead of the above-described drop dosing device 30 shown in the Figures and being air operated, other types of drop dosing devices may be used in the apparatus 4, such as, e.g., syringe type drop dosing devices.

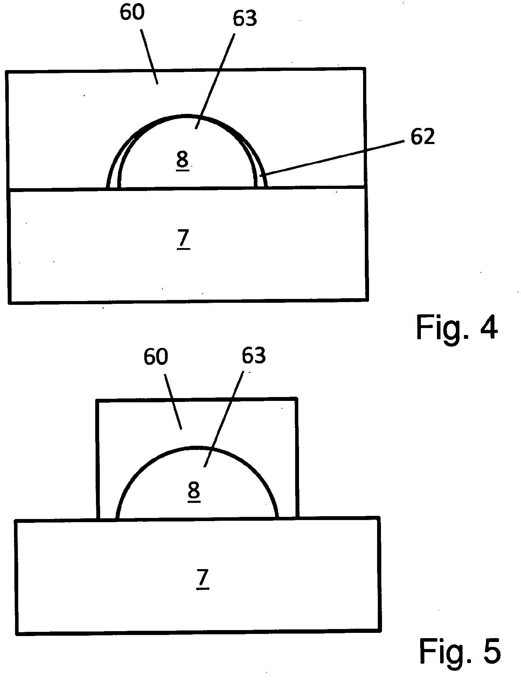

For a single drop 8 on the surface 6 Figure 3 illustrates, in a schematic top view, the field of view of the camera 10 and the illumination of the drop by the illuminating device 20. The light source 22 and the remainder of the illuminating device 20 are configured such that the drop 8 is illuminated from the left-hand side in Figures 1 and 3 in effect by a two-dimensional light field 60 (see also Figures 4 and 5). The camera 10 views both the drop 8 and the light field 60 from the side of the drop 8 opposite the light field 60.

As can be taken from Figure 3, the illumination angle 61 of the drop 8 by the light field 60 as measured in a plane parallel to the surface 6 depends on the width of the light field 60, i.e. the dimension of the light field parallel to the surface 6. It can also be taken from Figure 3 that with increasing illumination angle 61 the drop 8 is increasingly illuminated also from the lateral sides in a direction perpendicular to the axis of the field of view of the camera 10. Conversely, such illumination from the lateral sides can be decreased by decreasing the width of the light field 60.

In Figure 4 it is illustrated that illumination from the lateral sides causes reflections 62 at the corresponding sides of the drop 8, which reflections 62 disturb the shadow image 63 of the drop 8 such that in images recorded by the camera 10 the drop 8 appears to be smaller than in reality. As shown in Figure 5, by decreasing the width of the light field 60 as compared to Figure 4, the reflections 62 can be minimized or avoided altogether, such that the shadow image 63 recorded by the camera 10 corresponds to the actual contour of the drop 8. For creating the light field 60, the light source 22 may include a one- or two-dimensional array of light-emitting diodes, which can be switched on and off selectively by the controller 39 for adjusting the width, and possibly also the height, of the light field 60. This adjustment may preferably also be a part of the automatic operation sequence described above and initiated by pressing the button 50. In this regard, the controller 39 may be adapted to control the camera 10 and the processing device 40 in such a manner that several images are recorded and the width of the light field 60 is adjusted in steps in order to maximize the width of the shadow image 63 of the drop 8.

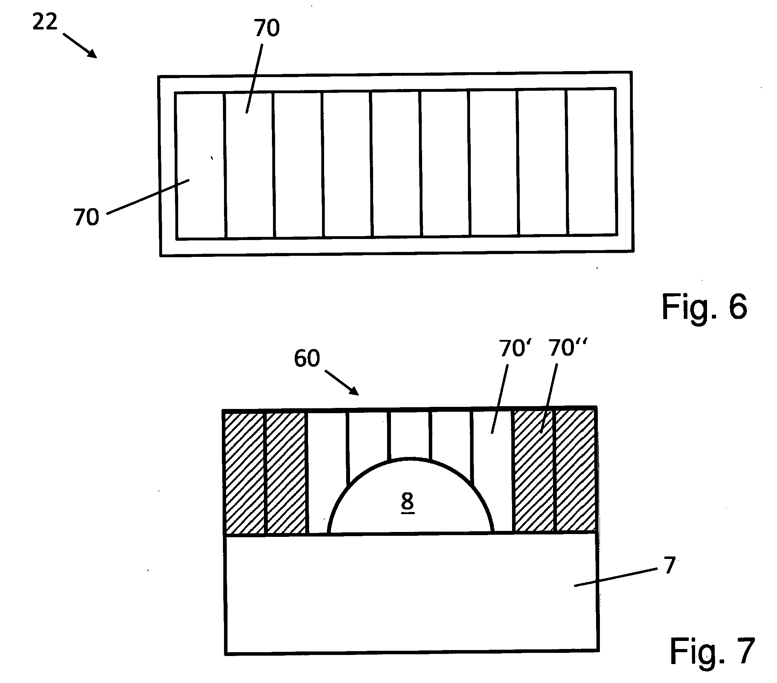

Figure 6 schematically illustrates a light source 22 including a one-dimensional array of nine anorganic light-emitting diodes 70, and Figure 7 schematically illustrates how the camera 10 views the drop 8 with the light field 60 created by the light source 22 and the light diffuser 24 visible on the opposite side behind the drop 8. In Figure 7, the width of the light field 60 has been adapted to the width of the drop 8 by switching off the two left-most and the two right-most light-emitting diodes (indicated by crosshatching; one of these light-emitting diodes is designated with the reference numeral 70"), and only switching on the remaining light-emitting diodes (one of these light-emitting diodes is designated with the reference numeral 70').

The light diffuser 24 advantageously may be constructed such that it comprises separate diffuser sections for the individual light-emitting diodes 70, which diffuser sections are separated such that each diffuser section receives - and diffuses
- light essentially or at least predominantly from the associated light-emitting diode only.
As an alternative to the illustrated and described illuminating unit 21, an illuminating unit 21 could be used comprising
- instead of the one- or two-dimensional array of anorganic light-emitting diodes - a two dimensional OLED array. Due to the fact that OLED elements are much smaller than light-emitting diodes, such an OLED array can create a light field with a high resolution, so that no light diffuser is required.

## Claims

1. A contact angle measurement apparatus for measuring a contact angle between a surface (6) of a solid sample body (7) and at least one drop (8) of sample liquid disposed on the surface (6), the apparatus comprising:
at least one drop dosing device (30) adapted and arranged for applying a drop (8) of a liquid onto a surface (6) of a sample body (7),
an illuminating device (20) adapted and arranged for illuminating each drop (8) applied by the at least one drop dosing device (30) onto the surface (6) from a first side of the at least one drop (8), and
an image recording device (10) adapted and arranged for recording an image of at least a transition region between the surface (6) and each drop (8) applied by the at least one drop dosing device (30) onto the surface (6) in side view from a second side of the drop (8) opposite the first side,
wherein the illuminating device (20) comprises a light-emitting arrangement which, when viewed by the image recording device (10), provides a two-dimensional light field (60),
wherein the contact angle measurement apparatus further comprises a controller (39) connected to the illuminating device (20), wherein
the light-emitting arrangement comprises a plurality of light-emitting elements (22, 70) for providing the two-dimensional light field (60), **characterized in that** the light emitting elements (22, 70) are arranged in an array and **in that** the controller (39) is adapted to adjust at least one dimension of the light field (60) by selectively switching on and off the light-emitting elements (70).

2. The contact angle measurement apparatus according to claim 1, wherein the light-emitting elements (70) are anorganic light-emitting diodes or organic light-emitting diodes.

3. The contact angle measurement apparatus according to claim 1 or claim 2, wherein the light-emitting arrangement comprises a light diffuser (24), which is mounted with respect to the light-emitting elements (22, 70) in such a manner that the light emitted by the light-emitting elements (22, 70) passes through the light diffuser (24), so that the light field (60) is generated by light emitted by the light-emitting elements (22, 70) and diffused by the light diffuser (24).

4. The contact angle measurement apparatus according to claim 3, wherein the illuminating device (20) includes an illuminating unit (21) and a spring suspension arrangement (23) carrying the illuminating unit (21), wherein the illuminating unit (21) comprises the light-emitting arrangement and is arranged in such a manner that it can rest on the surface (6) of the sample body (7) while being pressed against the surface (6) by a spring force applied by the spring suspension means.

5. The contact angle measurement apparatus according to claim 1 or claim 2, wherein the light field (60) is generated directly by the light-emitting elements (22, 70).

6. The contact angle measurement apparatus according to any of the preceding claims, wherein the light-emitting arrangement comprises a diaphragm having an adjustable aperture, wherein the controller (39) is connected to the diaphragm and adapted to adjust at least one dimension of the light field (60) by selectively adjusting the aperture of the diaphragm.

7. The contact angle measurement apparatus according to any of the preceding claims, wherein the controller (39) and the light-emitting arrangement are adapted such that at least the width of the light field (60), when viewed by the image recording device (10), is selectively adjustable by the controller (39).

8. The contact angle measurement apparatus according to claim 7, wherein the controller (39) and the light-emitting arrangement are adapted such that both the width and the height of the light field (60), when viewed by the image recording device (10), are selectively adjustable by the controller (39).

9. The contact angle measurement apparatus according to any of the preceding claims, wherein the contact angle measurement apparatus further comprises a processing device (40), which is connected to or forms part of the image recording device (10) and which is adapted to receive an image from the image recording device (10) representing a shadow image of a drop (8) on the surface (6), to analyze the received image, and to cooperate with the controller (39) to automatically effect adjustment of at least one dimension of the light field (60) based on the result of the analysis in order to maximize the respective at least one dimension of the shadow image of the drop (8).

10. The contact angle measurement apparatus according to any of the preceding claims, wherein each of the at least one drop dosing device (30) is arranged to apply drops (8) of liquid in a field of view of the image recording device (10) and/or in a region illuminated by the light field (60).

11. The contact angle measurement apparatus according to any of the preceding claims, wherein the at least one drop dosing device (30), the illuminating device (20) and the image recording device (10) are integrated into a movable measurement head.

12. The contact angle measurement apparatus according to any of the preceding claims, wherein the image recording device (10) comprises a CCD or CMOS image sensor.

13. The contact angle measurement apparatus according to any of the preceding claims, further comprising a processing device (40) adapted for carrying out a contour recognition of any drops (8) present in images recorded by the image recording device (10) and determining for each of these drops (8) a contact angle from the recognized contour.

14. The contact angle measurement apparatus according to any of the preceding claims, further comprising an actuation means (50) for actuation by an operator and connected to the controller (39), wherein the controller (39) is adapted to detect actuation of the actuation means (50) and, upon detecting actuation, to automatically control the at least one drop dosing device (30) to apply a respective drop (8) of liquid to the surface (6), the illuminating device (20) to illuminate each drop (8) applied by the at least one drop dosing device (30) including adjusting at least one dimension of the light field (60), and the image recording device (10) to record an image of each of the drops (8) illuminated by the illuminating device (20).

## Patentansprüche

1. Kontaktwinkelmessvorrichtung zur Messung eines Kontaktwinkels zwischen einer Oberfläche (6) eines festen Probenkörpers (7) und mindestens einem auf der Oberfläche (6) angeordneten Tropfen (8) einer Probenflüssigkeit, wobei die Vorrichtung Folgendes umfasst:
mindestens eine Tropfendosiervorrichtung (30), dazu ausgebildet und angeordnet, einen Tropfen (8) einer Flüssigkeit auf eine Oberfläche (6) eines Probenkörpers (7) aufzubringen,
eine Beleuchtungsvorrichtung (20), dazu ausgebildet und angeordnet, jeden durch die Tropfendosiervorrichtung (30) auf die Oberfläche (6) aufgebrachten Tropfen (8) von einer ersten Seite des mindestens einen Tropfens (8) zu beleuchten, und
eine Bildaufnahmevorrichtung (10), dazu ausgebildet und angeordnet, ein Bild zumindest einer Übergangsregion zwischen der Oberfläche (6) und jedem durch die mindestens eine Tropfendosiervorrichtung (30) auf die Oberfläche (6) aufgebrachten Tropfen (8) in seitlicher Ansicht einer der ersten Seite gegenüberliegenden zweiten Seite des Tropfens (8) aufzunehmen,
wobei die Beleuchtungsvorrichtung (20) eine lichtemittierende Anordnung umfasst, die von der Bildaufnahmevorrichtung (10) aus gesehen ein zweidimensionales Lichtfeld (60) bereitstellt,
wobei die Kontaktwinkelmessvorrichtung weiterhin eine mit der Beleuchtungsvorrichtung (20) verbundene Steuereinheit (39) aufweist, wobei die lichtemittierende Anordnung eine Vielzahl lichtemittierender Elemente (22, 70) zur Bereitstellung des zweidimensionalen Lichtfelds (60) umfasst,
**dadurch gekennzeichnet, dass** die lichtemittierenden Elemente (22, 70) in einem Array angeordnet sind und dass die Steuereinheit (39) dazu ausgebildet ist, mindestens eine Dimension des Lichtfelds (60) durch selektives An- und Ausschalten der lichtemittierenden Elemente (70) anzupassen.

2. Kontaktwinkelmessvorrichtung nach Anspruch 1, wobei die lichtemittierenden Elemente (70) anorganische lichtemittierende Dioden oder organische lichtemittierende Dioden sind.

3. Kontaktwinkelmessvorrichtung nach Anspruch 1 oder 2, wobei die lichtemittierende Anordnung einen Lichtdiffusor (24) umfasst, welcher in Bezug auf die lichtemittierenden Elemente (22, 70) derart gelagert ist, dass das durch die lichtemittierenden Elemente (22, 70) emittierte Licht den Lichtdiffusor (24) durchtritt, so dass das Lichtfeld (60) durch von den lichtemittierenden Elementen (22, 70) erzeugtes und durch den Lichtdiffusor (24) gestreutes Licht erzeugt wird.

4. Kontaktwinkelmessvorrichtung nach Anspruch 3, wobei die Beleuchtungsvorrichtung (20) eine Beleuchtungseinheit (21) und eine die Beleuchtungseinheit (21) tragende Federaufhängungsanordnung (23) umfasst, wobei die Beleuchtungseinheit (21) das lichtemittierende Array umfasst und derart angeordnet ist, dass sie auf der Oberfläche (6) des Probenkörpers (7) ruhen kann, während sie durch eine von der Federaufhängungsanordnung aufgebrachte Federkraft gegen die Oberfläche (6) gedrückt wird.

5. Kontaktwinkelmessvorrichtung nach Anspruch 1 oder 2, wobei das Lichtfeld (60) direkt durch die lichtemittierenden Elemente (22, 70) generiert wird.

6. Kontaktwinkelmessvorrichtung nach einem der vorhergehenden Ansprüche, wobei die lichtemittierende Anordnung eine Blende mit einer verstellbaren Blendenöffnung umfasst, wobei die Steuereinheit (39) mit der Blende verbunden ist und dazu ausgebildet ist, mindestens eine Dimension des Lichtfelds (60) durch selektives Verstellen der Blendenöffnung der Blende anzupassen.

7. Kontaktwinkelmessvorrichtung nach einem der vorhergehenden Ansprüche, wobei die Steuerungseinheit (39) und die lichtemittierende Anordnung derart ausgebildet sind, dass zumindest die Breite des Lichtfelds (60), von der Bildaufnahmevorrichtung (10) aus gesehen, durch die Steuerungseinheit (39) selektiv verstellbar ist.

8. Kontaktwinkelmessvorrichtung nach Anspruch 7, wobei die Steuerungseinheit (39) und die lichtemittierende Anordnung derart ausgebildet sind, dass sowohl die Breite als auch die Höhe des Lichtfelds (60), von der Bildaufnahmevorrichtung (10) aus gesehen, durch die Steuerungseinheit (39) selektiv verstellbar sind.

9. Kontaktwinkelmessvorrichtung nach einem der vorhergehenden Ansprüche, wobei die Kontaktwinkelmessvorrichtung weiterhin eine Verarbeitungsvorrichtung (40) umfasst, die mit der Bildaufnahmevorrichtung (10) verbunden ist oder einen Teil dieser bildet und welche dazu ausgebildet ist, ein Bild von der Bildaufnahmevorrichtung (10) zu empfangen, das ein Schattenbild eines Tropfens (8) auf der Oberfläche (6) darstellt, das empfangene Bild zu analysieren und mit der Steuerungseinheit (39) zusammenzuarbeiten, um automatisch die Anpassung mindestens einer Dimension des Lichtfelds (60) basierend auf dem Ergebnis der Analyse zu beeinflussen, um die entsprechende mindestens eine Dimension des Schattenbilds des Tropfens (8) zu maximieren.

10. Kontaktwinkelmessvorrichtung nach einem der vorhergehenden Ansprüche, wobei jede der mindestens einen Tropfendosiervorrichtung (30) zur Aufbringung von Tropfen (8) einer Flüssigkeit in einem Sichtfeld der Bildaufnahmevorrichtung (10) und/oder in einer durch das Lichtfeld (60) beleuchteten Region angeordnet ist.

11. Kontaktwinkelmessvorrichtung nach einem der vorhergehenden Ansprüche, wobei die mindestens eine Tropfendosiervorrichtung (30), die Beleuchtungsvorrichtung (20) und die Bildaufnahmevorrichtung (10) in einen beweglichen Messkopf integriert sind.

12. Kontaktwinkelmessvorrichtung nach einem der vorhergehenden Ansprüche, wobei die Bildaufnahmevorrichtung (10) einen CCD- oder CMOS-Bildsensor umfasst.

13. Kontaktwinkelmessvorrichtung nach einem der vorhergehenden Ansprüche, weiter umfassend eine Verarbeitungseinheit (40), die dazu ausgebildet ist, eine Profilerkennung von Tropfen (8) durchzuführen, die in durch die Bildaufnahmevorrichtung (10) aufgenommenen Bildern vorhanden sind, und für jeden der Tropfen (8) einen Kontaktwinkel aus dem erkannten Profil zu bestimmen.

14. Kontaktwinkelmessvorrichtung nach einem der vorhergehenden Ansprüche, weiter umfassend ein mit der Steuerungseinheit (39) verbundenes Betätigungsmittel (50) zur Betätigung durch eine Bedienperson, wobei die Steuerungseinheit (39) dazu ausgebildet ist, eine Betätigung der Betätigungsmittel (50) zu erkennen und, nach Erkennen der Betätigung, die mindestens eine Tropfendosiervorrichtung (30) zur Aufbringung eines entsprechenden Tropfens (8) einer Flüssigkeit auf die Oberfläche (6) automatisch anzusteuern, die Beleuchtungseinheit (20) zur Beleuchtung jedes durch die mindestens eine Tropfendosiervorrichtung (30) aufgebrachten Tropfens (8) einschließlich des Anpassens mindestens einer Dimension des Lichtfelds (60) automatisch anzusteuern, und die Bildaufnahmevorrichtung (10) zur Aufnahme eines Bildes jedes der durch die Beleuchtungsvorrichtung (20) beleuchteten Tropfens (8) automatisch anzusteuern.

## Revendications

1. Appareil de mesure d'angle de contact pour mesurer un angle de contact entre une surface (6) d'un corps d'échantillon solide (7) et au moins une goutte (8) de liquide d'échantillon disposée sur la surface (6), l'appareil comprenant :
au moins un dispositif de dosage de goutte (30) adapté et agencé pour appliquer une goutte (8) d'un liquide sur une surface (6) d'un corps d'échantillon (7),
un dispositif d'éclairage (20) adapté et agencé pour éclairer chaque goutte (8) appliquée par l'au moins un dispositif de dosage de goutte (30) sur la surface (6) depuis un premier côté de l'au moins une goutte (8), et
un dispositif d'enregistrement d'image (10) adapté et agencé pour enregistrer une image d'au moins une région de transition entre la surface (6) et chaque goutte (8) appliquée par l'au moins un dispositif de dosage de goutte (30) sur la surface (6) dans une vue latérale depuis un second côté de la goutte (8) opposé au premier côté,
dans lequel le dispositif d'éclairage (20) comprend un agencement à émission lumineuse qui, lorsqu'il est visualisé par le dispositif d'enregistrement d'image (10), fournit un champ lumineux bidimensionnel (60),
dans lequel l'appareil de mesure d'angle de contact comprend en outre un contrôleur (39) connecté au dispositif d'éclairage (20), dans lequel
l'agencement à émission lumineuse comprend une pluralité d'éléments à émission lumineuse (22, 70) pour fournir le champ lumineux bidimensionnel (60), **caractérisé en ce que** les éléments à émission lumineuse (22, 70) sont agencés en un réseau et **en ce que** le contrôleur (39) est adapté à ajuster au moins une dimension du champ lumineux (60) en allumant et éteignant sélectivement les éléments à émission lumineuse (70).

2. Appareil de mesure d'angle de contact selon la revendication 1, dans lequel les éléments à émission lumineuse (70) sont des diodes électroluminescentes anorganiques ou des diodes électroluminescentes organiques.

3. Appareil de mesure d'angle de contact selon la revendication 1 ou la revendication 2, dans lequel l'agencement à émission lumineuse comprend un diffuseur lumineux (24) qui est monté par rapport aux éléments à émission lumineuse (22, 70) de telle sorte que la lumière émise par les éléments à émission lumineuse (22, 70) passe à travers le diffuseur lumineux (24) de sorte que le champ lumineux (60) est généré par de la lumière émise par les éléments à émission lumineuse (22, 70) et diffusée par le diffuseur lumineux (24).

4. Appareil de mesure d'angle de contact selon la revendication 3, dans lequel le dispositif d'éclairage (20) inclut un module d'éclairage (21) et un agencement de suspension à ressort (23) portant le module d'éclairage (21), dans lequel le module d'éclairage (21) comprend l'agencement à émission lumineuse et est agencé de telle sorte qu'il peut reposer sur la surface (6) du corps d'échantillon (7) tout en étant pressé contre la surface (6) par une force de ressort appliquée par le moyen de suspension à ressort.

5. Appareil de mesure d'angle de contact selon la revendication 1 ou la revendication 2, dans lequel le champ lumineux (60) est généré directement par les éléments à émission lumineuse (22, 70).

6. Appareil de mesure d'angle de contact selon l'une quelconque des revendications précédentes, dans lequel l'agencement à émission lumineuse comprend un diaphragme ayant une ouverture ajustable, dans lequel le contrôleur (39) est connecté au diaphragme et adapté à ajuster au moins une dimension du champ lumineux (60) en ajustant sélectivement l'ouverture du diaphragme.

7. Appareil de mesure d'angle de contact selon l'une quelconque des revendications précédentes, dans lequel le contrôleur (39) et l'agencement à émission lumineuse sont adaptés de sorte qu'au moins la largeur du champ lumineux (60), lorsqu'il est visualisé par le dispositif d'enregistrement d'image (10), est ajustable sélectivement par le contrôleur (39).

8. Appareil de mesure d'angle de contact selon la revendication 7, dans lequel le contrôleur (39) et l'agencement à émission lumineuse sont adaptés de sorte qu'à la fois la largeur et la hauteur du champ lumineux (60), lorsqu'il est visualisé par le dispositif d'enregistrement d'image (10), sont ajustables sélectivement par le contrôleur (39).

9. Appareil de mesure d'angle de contact selon l'une quelconque des revendications précédentes, dans lequel l'appareil de mesure d'angle de contact comprend en outre un dispositif de traitement (40) qui est connecté à ou fait partie du dispositif d'enregistrement d'image (10) et qui est adapté à recevoir une image du dispositif d'enregistrement d'image (10) représentant une image fantôme d'une goutte (8) sur la surface (6), à analyser l'image reçue et à coopérer avec le contrôleur (39) pour effectuer automatiquement l'ajustement d'au moins une dimension du champ lumineux (60) en fonction du résultat de l'analyse afin de maximiser l'au moins une dimension respective de l'image fantôme de la goutte (8).

10. Appareil de mesure d'angle de contact selon l'une quelconque des revendications précédentes, dans lequel chacun de l'au moins un dispositif de dosage de goutte (30) est agencé pour appliquer des gouttes (8) de liquide dans un champ de visualisation du dispositif d'enregistrement d'image (10) et/ou dans une région éclairée par le champ lumineux (60).

11. Appareil de mesure d'angle de contact selon l'une quelconque des revendications précédentes, dans lequel l'au moins un dispositif de dosage de goutte (30), le dispositif d'éclairage (20) et le dispositif d'enregistrement d'image (10) sont intégrés dans une tête de mesure mobile.

12. Appareil de mesure d'angle de contact selon l'une quelconque des revendications précédentes, dans lequel le dispositif d'enregistrement d'image (10) comprend un capteur d'images CCD ou CMOS.

13. Appareil de mesure d'angle de contact selon l'une quelconque des revendications précédentes, comprenant en outre un dispositif de traitement (40) adapté à effectuer une reconnaissance de contour de toute goutte (8) présente dans des images enregistrées par le dispositif d'enregistrement d'image (10) et déterminer pour chacune de ces gouttes (8) un angle de contact à partir du contour reconnu.

14. Appareil de mesure d'angle de contact selon l'une quelconque des revendications précédentes, comprenant en outre un moyen d'actionnement (50) pour l'actionnement par un opérateur et connecté au contrôleur (39), dans lequel le contrôleur (39) est adapté à détecter l'actionnement du moyen d'actionnement (50) et, suite à la détection de l'actionnement, à commander automatiquement l'au moins un dispositif de dosage de goutte (30) à appliquer une goutte respective (8) de liquide sur la surface (6), le dispositif d'éclairage (20) à éclairer chaque goutte (8) appliquée par l'au moins un dispositif de dosage de goutte (30) y compris ajuster au moins une dimension du champ lumineux (60), et le dispositif d'enregistrement d'image (10) à enregistrer une image de chacune des gouttes (8) éclairées par le dispositif d'éclairage (20).
